# FASCICULE DE BREVET EUROPEEN

(11) **EP 2 952 373 B1**
(45) Date de publication et mention de la délivrance du brevet: **30.10.2019**
(21) Numéro de dépôt: 15177329.8
(22) Date de dépôt: 02.09.2011
(51) Int. Cl.: B60J 5/04, E05F 11/38

(54) **MODULE DE PORTE DE VÉHICULE AUTOMOBILE COMPRENANT UN SYSTÈME LÈVE-VITRE**
TÜRMODUL EINES KRAFTFAHRZEUGS, DAS EIN FENSTERHEBERSYSTEM UMFASST
MOTOR VEHICLE DOOR MODULE COMPRISING A WINDOW RAISING SYSTEM

(30) Priorité: 02.09.2010 FR 1056966
(43) Date de publication de la demande: 09.12.2015
(62) Demande divisionnaire de: 11773023.4
(73) Titulaire: Faurecia Intérieur Industrie, 92000 Nanterre (FR)
(72) Inventeur: HAYOTTE, Sébastien, 92500 RUEIL MALMAISON (FR)
(74) Mandataire: Lavoix

(56) Documents cités:
- WO-A1-01/25039
- WO-A1-2010/003841
- DE-U1-202007 003 226
- FR-A1- 2 815 298
- US-A- 6 161 337
- US-A1- 2002 112 406
- US-A1- 2006 000 149

## Description

La présente invention concerne un module de porte de véhicule automobile, du type réalisé d'une seule pièce et à partir d'une matière plastique unique injectée, ledit module comprenant une face de support sensiblement plane et au moins un rail de guidage d'un système lève-vitre, ledit rail étant destiné à guider et à maintenir un dispositif de support de vitre de véhicule automobile

Les modules de porte sont des pièces, par exemple en matière plastique, destinées à être montées sur la porte d'un véhicule automobile afin d'y regrouper certaines fonctions de la porte tout en allégeant celle-ci. Ces fonctions sont par exemple le système lève-vitre, la poignée intérieure, le support d'un haut-parleur, le maintien du câblage électrique, etc.

Un module de porte intègre par exemple un rail de guidage pour un système lève-vitre permettant de guider en translation un dispositif de support d'une vitre afin de déplacer celle-ci entre une position ouverte et une position fermée.

Le document FR-2 920 183 décrit par exemple un module de porte comprenant un rail de guidage formé par une nervure, c'est-à-dire un segment droit s'étendant en saillie de la surface plane du module de porte. Une telle nervure n'est pas satisfaisante car elle ne permet un maintien du dispositif de support que selon une direction, à savoir une direction sensiblement perpendiculaire à la direction dans laquelle s'étend la nervure. Ce maintien unidirectionnel est trop fragile et le dispositif de support peut sortir de la nervure, par exemple en cas de choc, la vitre n'étant alors plus soutenue par le module de porte.

Les documents US 6,161,337 et WO 01/25039 A1 divulguent également des modules de porte comprenant un rail de guidage.

Le module de porte intègre également généralement un joint d'étanchéité permettant d'assurer l'étanchéité avec la porte du véhicule lorsque le module est monté. Un tel joint s'étend sur toute la périphérie du module, y compris au-delà des rails et est réalisée d'une seule pièce avec le module de porte. Cependant, un tel joint empêche de réaliser un module de porte de façon simple si l'on souhaite également que le module de porte comprenne un rail de guidage de forme plus complexe qu'une nervure afin d'assurer un maintien efficace du dispositif de support. En effet, dans ce cas, si l'on souhaite réaliser d'une seule pièce le module de porte, il faut prévoir des tiroirs mobiles pour former le rail de forme complexe en saillie par rapport à la surface plane du module et au joint d'étanchéité. Le moule d'injection est alors compliqué par la présence de tels tiroirs en plus des deux parties de moule et le procédé de réalisation du module nécessite des étapes de commande du mouvement des tiroirs en plus de l'ouverture et de la fermeture du moule. Le module de porte est ainsi plus coûteux à produire et les cadences de production sont réduites.

L'un des buts de l'invention est de palier ces inconvénients en proposant un module de porte comprenant un rail de guidage assurant un maintien efficace du dispositif de support de vitre et pouvant intégrer un grand nombre de fonctions de la porte tout en étant simple à réaliser en une seule opération d'injection.

A cet effet, l'invention concerne un module de porte du type précité, dans lequel ledit rail forme au moins une partie d'une des parties extrêmes latérales de la face de support, ledit rail s'étendant de façon continue avec le reste du module et formant un décrochement par rapport à la face de support, ledit rail s'étendant dans au moins deux plans différents du plan de la face de support.

Le fait de prévoir un rail s'étendant dans au moins deux plans différents du plan de la face de support permet d'avoir un maintien efficace du dispositif de support de vitre, à la fois selon la direction dans laquelle s'étend le rail et dans les directions perpendiculaires à cette direction. En outre, comme le rail forme une partie d'une des parties extrêmes latérales du module, il n'est pas nécessaire de prévoir de tiroir mobile dans le moule pour réaliser le rail. Le module de porte est donc particulièrement simple, rapide et peu coûteux à réaliser.

Selon d'autres aspects du module de porte :
- le module de porte comprend deux rails de guidage d'un système lève-vitre, chaque rail formant au moins une partie d'une partie extrême latérale de la face de support, lesdits rails s'étendant de façon continue avec le reste du module et formant chacun un décrochement par rapport à la face de support, lesdits rails s'étendant chacun dans au moins deux plans différents du plan de la face de support ;
- le rail comprend une première branche s'étendant sensiblement dans un plan transversal à partir de la face de support et une deuxième branche s'étendant sensiblement dans un plan longitudinal à partir de la première branche ;
- le module de porte comprend au moins un support de haut-parleur formé par un orifice dans la face de support ;
- le module de porte comprend au moins un support de réception d'une poignée intérieure de porte ;
- le module de porte comprend au moins un moyen de support de moyens d'actionnement du système lève-vitre ;
- le module de porte comprend au moins un moyen de réception de câbles fonctionnels du véhicule automobile ;
- le module de porte comprend des moyens de renfort du module, lesdits moyens étant formés par une pluralité de nervures s'étendant en saillie de la face de support ; et
- la matière unique injectée est un matériau plastique à base de polypropylène renforcé par des fibres de verre.

L'invention concerne également une porte de véhicule automobile comprenant une ouverture de réception d'un module de porte, un module de porte tel que décrit ci-dessus étant fixé dans ladite ouverture de réception, un système lève-vitre étant assemblé sur ledit module de porte, ledit système comprenant au moins un dispositif de support d'une vitre monté de façon coulissante sur le rail du module de porte.

L'invention concerne également un procédé de réalisation d'un module de porte tel que décrit ci-dessus, du type comprenant une étape unique d'injection d'une matière unique dans un moule d'injection comprenant uniquement deux parties de moule et une étape de démoulage du module par écartement des deux parties de moule.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective d'un module de porte selon un premier mode de réalisation de l'invention,
- la Fig. 2 est une représentation schématique en perspective du module de porte de la Fig. 1 reçu dans une porte de véhicule automobile,
- la Fig. 3 est une représentation schématique en perspective d'un module de porte selon un deuxième mode de réalisation,
- la Fig. 4 est une vue schématique en coupe selon l'axe IV-IV de la Fig. 3, un dispositif de support de vitre étant reçu sur le rail de guidage,
- la Fig. 5 est en vue analoque à la figure 4 d'une variante de réalisation.

Dans la description, le terme « longitudinal » est défini par rapport aux plans parallèles au plan dans lequel s'étend la face de support du module de porte et le terme « transversal » est défini par rapport aux plans perpendiculaires aux plans longitudinaux.

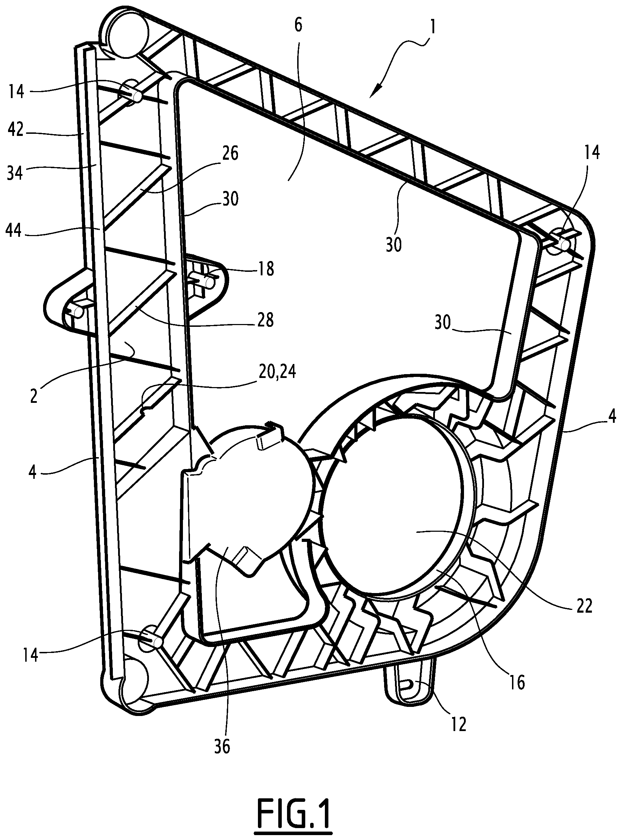

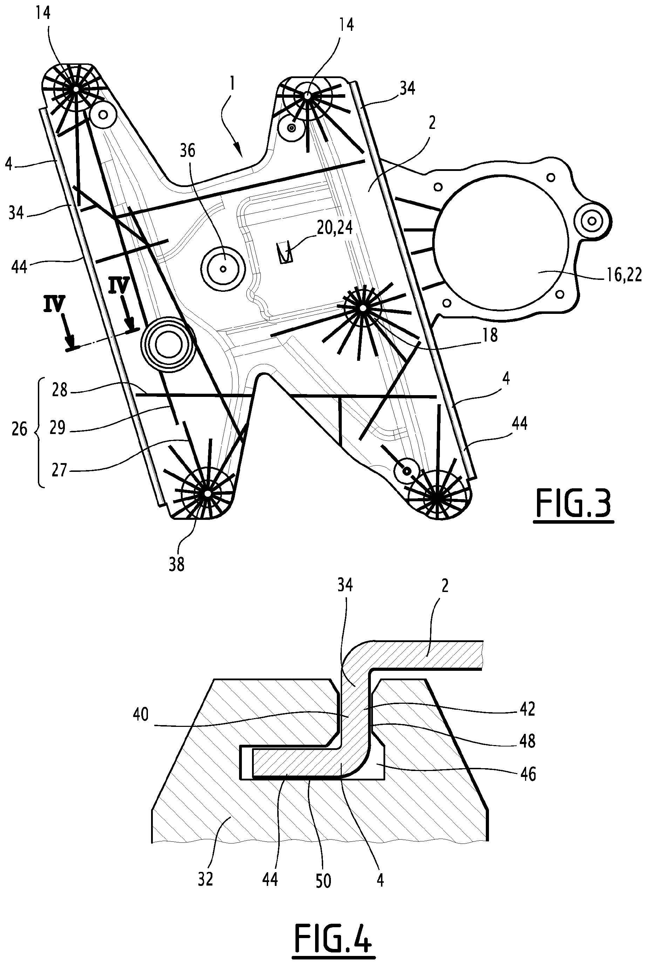

En référence aux Fig. 1 et 3, on décrit un module de porte 1 réalisé d'une seule pièce et à partir d'une matière plastique unique injectée. Par « réalisé d'une seule pièce », on entend que le module de porte 1 est monobloc, tous les éléments le constituant étant réalisés simultanément de façon continue en une même pièce. Par « à partir d'une matière plastique unique », on entend qu'un seul produit est utilisé pour réaliser l'injection du module de porte 1, même si ce produit est un mélange de plusieurs matériaux différents.

Ainsi le module de porte 1 selon l'invention est réalisé à partir d'une matière plastique. Le module de porte est par exemple réalisé à base de polypropylène renforcé par des fibres de verre. La matière employée est par exemple connue sous l'acronyme PP LGF pour « polypropylene long glass fibers », c'est-à-dire « polypropylène longues fibres de verre ».

Le module de porte comprend une face de support 2 sensiblement plane et s'étendant longitudinalement entre deux parties extrêmes latérales 4 formant les bords externes du module de porte 1 selon la largeur de celui-ci. La face de support 2 peut présenter des formes variées en fonction de l'architecture de la porte et du nombre de fonctions rapportées sur le module de porte 1. A titre d'exemple, la face de support 2 représentée sur la Fig. 1 présente une forme de cadre entourant une ouverture centrale 6, tandis que la face de support 2 représentée sur la Fig. 3 est sensiblement continue ente les parties extrêmes latérales 4 et présente sensiblement une forme en X. D'autres formes sont bien entendu envisageables.

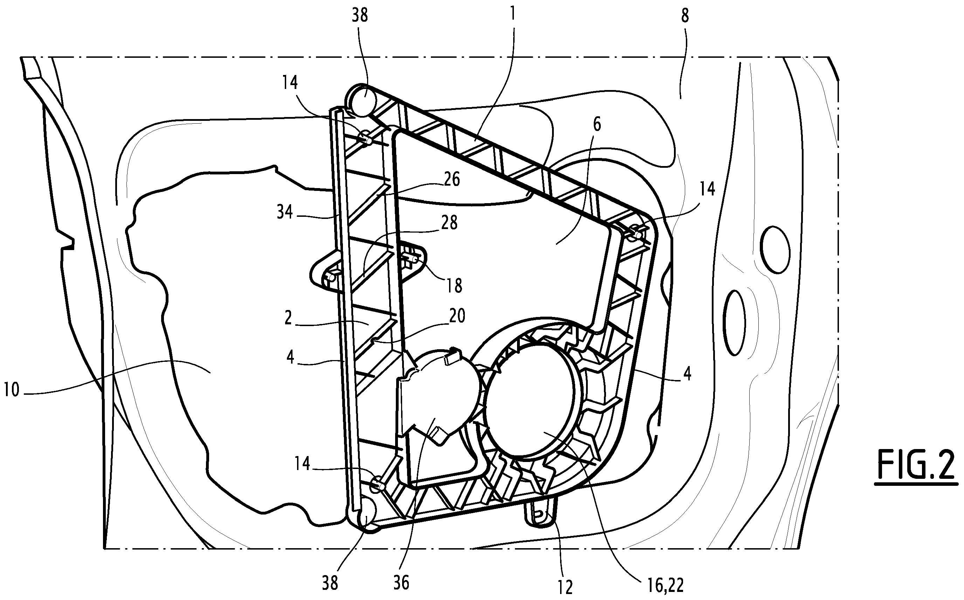

Comme représenté sur la Fig. 2, le module de porte 1 est fixé à une porte de véhicule automobile 8, en particulier dans une ouverture 10 de celle-ci. A cet effet, le module de porte 1 comprend des moyens de fixation à la porte, telle que des pattes de fixation 12 ou des fûts de vissage 14.

Outre ces moyens de fixation, le module de porte 1 permet de regrouper un grand nombre de fonctions de la porte en injectant d'une seule pièce des moyens permettant de réaliser ces fonctions au cours de l'injection du module de porte.

Ainsi le module de porte comprend par exemple une partie d'un système lève-vitre, décrite ultérieurement, un support de haut-parleur 16, un support de réception d'une poignée intérieure 18, au moins un moyen de réception 20 de câbles fonctionnels du véhicule automobile, tels que des câbles électriques. D'autres fonctions pourraient bien entendu être regroupées sur le module de porte, telles que des moyens de support d'un accoudoir, d'un vide-poche ou autre.

Le support de haut-parleur 16 est par exemple formé par un orifice 22 formé dans la face de support 2 et comprenant des moyens d'emboîtement du haut-parleur comme représenté sur la Fig. 1 ou des orifices ou fûts de fixation du haut-parleur comme représenté sur la Fig. 3.

Le support de réception 18 d'une poignée intérieure est par exemple formé par un ou plusieurs points de fixation permettant de monter en rotation la poignée intérieure.

Le moyen de réception 20 de câbles fonctionnels est par exemple formé par un crochet ou une encoche 24 permettant de retenir un faisceau de câbles. Selon un mode de réalisation, plusieurs crochets ou encoches 24 sont prévus de sorte à former un chemin de câbles permettant d'orienter et de répartir les câbles de façon optimale.

Le module de porte comprend en outre des moyens de renfort 26 du module afin de lui conférer la rigidité requise. Selon les modes de réalisation représentés sur les figures, ces moyens de renfort 26 sont formés par une pluralité de nervures 28, 29 saillant sensiblement transversalement d'un côté de la face de support 2. Les nervures 28, 29 sont réparties de façon optimale pour garantir la rigidité souhaitée. Selon le mode de réalisation représenté sur les Fig. 1 et 2, les nervures 28 s'étendent sensiblement en dent de scie entre des bords saillant transversalement de la face de support 2 et délimitant cette face de support, tels que les bords latéraux 4 et des bords 30 s'étendant sur la périphérie de l'ouverture centrale 6. Les nervures 28 s'étendent donc en biais par rapport aux bords latéraux 4 et limitent la flexion d'une section sensiblement perpendiculaire à ces bords sous l'action d'un effet transversal. Il doit être noté que les bords latéraux 4 et les bords 30 formés par des nervures de hauteur plus importante que les nervures 28 créent une partie des moyens de rigidificution 26. En effet, ces bords (4, 30) limitent la flexion de la face support 2 selon la direction parallèle à ceux - ci en cas d'effort transversal. Selon le mode de réalisation représenté sur la Fig. 3, des nervures (27, 28, 29) s'étendent sur une partie de la surface de la face de support 2 pour créer les moyens de renfort 26. Les nervures 27 sont par exemple réparties « en étoile » à partir de certains points de fixation du module de porte 1, d'autres nervures 28 s'étendant en travers de la face de support 2 ou biais par rapport aux bords latéraux 4 pour augmenter la rigidité du module. Les nervures 29 s'étendent quant à parallèlement au bord latéral 4 et limite la flexion de celui-ci De tels nervures (27, 28, 29) permettent d'augmenter de façon simple la rigidité du module de porte 1 sans ajouter un poids conséquent à celui-ci.

Les encoches 24 formant les moyens de réception de câbles fonctionnels sont par exemple formées dans certaines des nervures 28, comme représenté sur la Fig. 1.

Le système lève-vitre formé en partie avec le module de porte 1 est par exemple un système à câbles ou à tubes Bowden. Dans un tel système, au moins un dispositif de support 32 (représenté partiellement sur la Fig. 4) de vitre (non représentée) est actionné en translation le long d'au moins un rail de guidage 34 au moyen d'au moins un câble (non représenté) actionné par des moyens d'actionnement tels qu'un tambour (non représenté) actionné manuellement ou par un moteur (non représenté). Selon l'agencement du système lève-vitre, le ou les câbles peuvent passer autour d'une ou plusieurs poulies (non représentées) disposées de façon adéquate. Le déplacement en translation du dispositif de support 32 permet de faire passer la vitre d'une position ouverte à une position fermée et inversement.

Le module de porte 1 comprend, intégrés d'une seule pièce avec la face de support 2, le rail de guidage 34 et des moyens de support 36 des moyens d'actionnement du système lève-vitre et éventuellement des moyens de support 38 des poulies. Les moyens de réception de câbles 20 peuvent également être utilisés pour le passage des câbles d'actionnement du système lève-vitre.

Selon le mode de réalisation représenté sur les Fig. 1 et 2, le module de porte 1 comprend un unique rail de guidage 34, pour un système lève-vitre dit « single-lift ». Ce rail 34 forme au moins une partie d'une des parties extrêmes latérales 4 de la face de support 2 et forme un décrochement 40 par rapport à la face de support 2, c'est-à-dire que le rail 34 s'étend en saillie par rapport à la face de support 2. Selon un mode de réalisation, le rail 34 forme l'intégralité d'une des parties extrêmes latérales 4 de la face de support.

Selon le mode de réalisation représenté sur la Fig. 3, le module de porte 1 comprend deux rails de guidage 34, pour un système lève-vitre dit « double-lift ». Chaque rail 34 forme au moins une partie d'une partie extrême latérale 4 de la face de support 2, c'est-à-dire que les deux parties extrêmes latérales 4 forme en partie un rail 34. Ces rails forment chacun un décrochement 40 par rapport à la face de support 2, c'est-à-dire que les rails 34 s'étendent en saillie par rapport à la face de support 2. Selon un mode de réalisation, chaque rail 34 forme l'intégralité d'une des parties extrêmes latérales 4 de la face de support 2.

Un rail de guidage 34 va maintenant être décrit plus en détail.

Le rail 34 forme une partie d'une des parties extrêmes latérales 4 de la face de support 2, c'est-à-dire que le rail 34 s'étend vers l'extérieur de la face de support 2 selon une direction longitudinale et qu'il n'y a pas d'autre élément du module de porte 1 au-delà du rail selon cette direction longitudinale.

Le rail 34 s'étend dans au moins deux plans différents du plan dans lequel s'étend la face de support 2. Ainsi, comme représenté sur la Fig. 4, le rail 34 comprend par exemple une première branche 42 s'étendant sensiblement dans un plan transversal à partir de la face de support 2 de façon continue avec ladite face de support 2, ladite branche 42 formant le décrochement 40, et une deuxième branche 44 s'étendant sensiblement dans un plan longitudinal, parallèle au plan de la face de support 2, à partir de la première branche 42 et vers l'extérieur du module de support 1. Comme le rail 34 s'étend de façon continue avec la face de support 2, il n'y a pas d'ouverture prévue dans le rail 34 ou à la transition entre le rail 34 et la face de support 2. Cela évite d'avoir à prévoir des moyens d'étanchéité d'une telle ouverture. La première branche 42 participe bien entendu au renforcement de la face support 2. Ceci de manière analogue aux nervures 29 de part son agencement dans un plan transversal et sa direction confondue avec le bord latéral 4.

Le dispositif de support 32 est conformé pour entourer le rail 34, comme représenté sur la Fig. 4 et comprend donc une ouverture 46 présentant une fente 48 s'étendant transversalement débouchant sur une fente 50 s'étendant longitudinalement. On comprend aisément qu'une telle forme de rail 34 et de dispositif de support 32 permet d'assurer un maintien selon les directions longitudinale et transversale du dispositif de support de vitre 32 afin d'assurer un support efficace et robuste de la vitre. Ainsi, le rail 34 assure à la fois le guidage en translation et le maintien du dispositif de support 32.

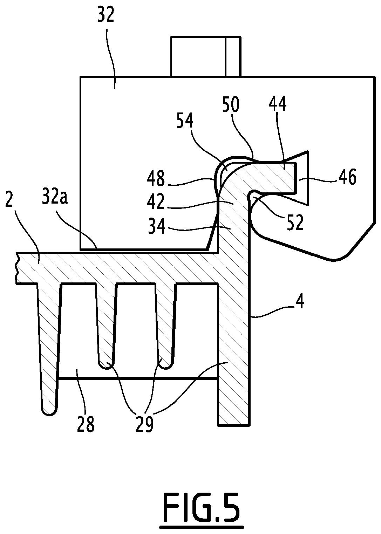

A la figure 5 est représentée une variante de réalisation de la représentation schématique de la figure 4. Le bord latéral 4 de la face support présente un rail 34 muni d'un dispositif de support, ou curseur, 32. Le curseur 32 représenté schématiquement est de type connu. Les fentes transversales et longitudinales (48, 50) présente des bossages adaptés pour venir en contact avec une certaine élasticité sur respectivement les premières et deuxièmes branches (42, 44) du rail. Ainsi le curseur 32 a des zones de contacts limitées et opposées avec chaque plan de rail et coulisse sans jeu.

On notera que le curseur 32 présente une large face 32a adjacente à la face de support 2. Le curseur 32 est donc empêché de tourner autour du rail 34, ici en sens anti-horaire, et l'extrémité de la face de support 2 participe au guidage.

Une nervure en biais 28 et quatre nervures 29 parallèles au bord 4 sont visibles à la figure 5. De la même manière que les nervures correspondantes du mode de réalisation de la figure 3, ces nervures (28, 29) forment des moyens de renfort.

La nervure parallèle 29 à l'extrémité de la face de support 2, à droite sur la figure 5, forme elle-même le bord latéral 4. Ainsi, le bord latéral 4 comprend une nervure latérale de renfort qui s'étend au moins en partie le long de ce bord, et de préférence sur toute la longueur du rail 34. Ceci permet de concentrer les moyens de renfort dans une portion fortement sollicitée du module de porte du fait de la présence du rail 34 et des efforts exercés par le curseur 32. Il a noté que les vitres des véhicules actuels sont souvent galbées. Le rail doit alors présenter également un galbe et conserver la géométrie de ce galbe et conserver la géométrie de ce galbe lors des mouvements de la vitre.

Toujours à propos de la nervure parallèle 29 de droite, il faut noter qu'elle s'étend transversalement de part et d'autre du plan de la face de support 4 et que la portion de celle-ci située d'un côté de ce plan forme la première branche 42 du rail de guidage. Ainsi une portion du module de porte, à savoir la première branche 42, remplie à la fois une fonction de guidage et une fonction de renfort. Il en est de même pour la portion d'extrémité de la face de support 2 le long de laquelle coulisse la face 32a du curseur et qui est renforcée par deux nervures 29 parallèles. Ceci permet un gain de matière plastique et donc des poids du module.

Toujours dans un but de rigidification et de gain de poids des cornières 52 et des ailettes 54 de renfort sont prévues à l'intérieur et à l'extérieur de l'angle entre les premières et deuxièmes branches (42, 44) du rail 34.

D'autres formes de rails 34 peuvent être envisagées. En particulier, une troisième branche s'étendant dans un plan transversal pourrait être ajoutée de sorte à s'étendre à partir de la partie libre de la deuxième branche 44. Il est possible de prévoir un rail correspondant à une forme standard de rail déjà utilisée par les constructeurs automobiles. Ainsi, il ne serait pas nécessaire de prévoir un dispositif de support de vitre, ou curseur, spécifique au rail 34 du module de support 1. Cela permettrait de limiter les modifications à apporter aux lignes de production déjà existantes pour réaliser le dispositif de support ou le système lève-vitre en général.

Du fait de l'absence de joint d'étanchéité sur la périphérie du module de porte, il n'y a pas d'élément de ce module qui s'étende au-delà du ou des rails 34 selon la direction longitudinale vers l'extérieur de la face de support 2. Cela permet de réaliser le module de porte décrit ci-dessus de façon particulièrement simple à partir d'un moule présentant simplement deux parties de moule définissant entre elles une cavité de moulage lorsque les parties sont appliquées l'une contre l'autre. En effet, la forme du rail permet un démoulage naturel du module de porte en écartant simplement les deux parties de moules l'une de l'autre. Il n'est donc pas nécessaire de prévoir de tiroir mobile supplémentaire pour démouler le rail 34. Cela s'applique également pour des formes plus complexes de rail, tant que le démoulage peut se faire par simple écartement des parties de moule.

Il peut éventuellement y avoir un élément localisé qui s'étende au-delà du rail, tel que le support de haut-parleur représenté sur la Fig. 3. Dans ce cas, seul un petit tiroir localisé sera nécessaire pour démouler le rail au droit de ce support. Cependant, ce tiroir est de petite dimension et ne s'étend pas sur toute la longueur du rail comme c'est le cas lorsqu'un joint d'étanchéité est prévu. Le démoulage reste donc assez simple et peu coûteux.

En outre, l'absence de joint d'étanchéité permet de réaliser une économie substantielle de matière et d'alléger de façon significative à la fois le module de porte produit et la structure de porte comprenant ce module de porte. En effet, outre le gain de matière sur le module, l'absence de joint permet de supprimer la piste d'appui de ce joint d'étanchéité sur la doublure de porte, ce qui permet de réaliser encore une économie de matériau et de masse. A titre d'exemple, un tel module de porte permet d'alléger de 3 à 4 Kg un véhicule comprenant une porte équipée d'un module de porte tel que décrit ci-dessus par rapport la masse d'un véhicule automobile équipé de portes classiques. L'étanchéité entre le module de porte 1 et la porte 8 peut être assurée de façon classique, par exemple au moyen d'une feuille de matériau imperméable, aisément mise en place et légère.

Le module de porte décrit ci-dessus est donc particulièrement simple et économique à réaliser, tout en offrant un maintien efficace du dispositif de support de vitre et en permettant de réduire la masse générale de la porte de véhicule automobile.

Le module de porte permet en outre de regrouper un grand nombre de fonction de la porte de véhicule, de façon simple et modulable, en modifiant simplement la forme de la cavité d'injection.

## Revendications

1. Module de porte (1) de véhicule automobile, du type réalisé d'une seule pièce et à partir d'une matière plastique unique injectée, ledit module comprenant une face de support (2) sensiblement plane et au moins un rail de guidage (34) d'un système lève-vitre, ledit rail (34) étant destiné à guider et à maintenir un dispositif de support (32) de vitre de véhicule automobile, ledit rail (34) formant au moins une partie d'une des parties extrêmes latérales (4) de la face de support (2), ledit rail (34) s'étendant de façon continue avec le reste du module (1) et formant un décrochement (40) par rapport à la face de support (2), ledit rail (34) s'étendant dans au moins deux plans différents du plan de la face de support (2), **caractérisé en ce que** la face de support présente la forme d'un cadre entourant une ouverture centrale (6).

2. Module de porte selon la revendication 1, **caractérisé en ce qu'**il comprend deux rails de guidage (34) d'un système lève-vitre, chaque rail (34) formant au moins une partie d'une partie extrême latérale (4) de la face de support (2), lesdits rails (34) s'étendant de façon continue avec le reste du module (1) et formant chacun un décrochement (40) par rapport à la face de support (2), lesdits rails (34) s'étendant chacun dans au moins deux plans différents du plan de la face de support (2).

3. Module de porte selon la revendication 1 ou 2, **caractérisé en ce que** le rail (34) comprend une première branche (42) s'étendant sensiblement dans un plan transversal à partir de la face de support (2) et une deuxième branche (44) s'étendant sensiblement dans un plan longitudinal à partir de la première branche (42).

4. Module de porte selon l'une quelconque des revendications 1 à 3, **caractérisé en ce qu'**il comprend au moins un support de haut-parleur (16) formé par un orifice (22) dans la face de support (2).

5. Module de porte selon l'une quelconque des revendications 1 à 4, **caractérisé en ce qu'**il comprend au moins un support de réception (18) d'une poignée intérieure de porte.

6. Module de porte selon l'une quelconque des revendications 1 à 5, **caractérisé en ce qu'**il comprend au moins un moyen de support (36) de moyens d'actionnement du système lève-vitre.

7. Module de porte selon l'une quelconque des revendications 1 à 6, **caractérisé en ce qu'**il comprend au moins un moyen de réception (24) de câbles fonctionnels du véhicule automobile.

8. Module de porte selon l'une quelconque des revendications 1 à 7, **caractérisé en ce qu'**il comprend des moyens de renfort (26) du module, lesdits moyens étant formés par une pluralité de nervures (27, 28, 29) s'étendant en saillie de la face de support (2).

9. Module de porte selon l'une quelconque des revendications 1 à 8 **caractérisé en ce qu'**au moins la partie extrême latérale (4) présentant le rail de guidage (34) comprend une nervure transversale de renfort (29) s'étendant sur au moins une partie de ladite partie extrême (4), et de préférence sur toute la longueur dudit rail de guidage.

10. Module de porte selon la revendication 9, dans lequel des nervures (28) s'étendent en dent de scie entre les bords latéraux (4) saillant transversalement et des bords (30) saillant transversalement, s'étendant sur la périphérie de l'ouverture centrale (6), de la face de support (2).

11. Module de porte selon l'une quelconque des revendications 1 à 10, **caractérisé en ce que** la matière unique injectée est un matériau plastique à base de polypropylène renforcé par des fibres de verre.

12. Porte de véhicule automobile, ladite porte (8) comprenant une ouverture (10) de réception d'un module de porte (1), un module de porte (1) selon l'une quelconque des revendications 1 à 11 étant fixé dans ladite ouverture de réception (10), un système lève-vitre étant assemblé sur ledit module de porte (1), ledit système comprenant au moins un dispositif de support (32) d'une vitre monté de façon coulissante sur le rail (34) du module de porte (1).

13. Porte de véhicule automobile selon la revendication 12, dans laquelle le dispositif de support (32) est conformé pour entourer le rail (34) et comprend une ouverture (46) présentant une fente (48) s'étendant transversalement débouchant sur une fente (50) s'étendant longitudinalement, le rail (34) assurant un maintien selon les directions longitudinale et transversale du dispositif de support de vitre (32).

14. Porte de véhicule automobile selon la revendication 12, comprenant en outre une feuille de matériau imperméable assurant l'étanchéité entre le module de porte (1) et la porte (8).

15. Procédé de réalisation d'un module de porte (1) selon l'une quelconque des revendications 1 à 11, comprenant les étapes suivantes :
- concevoir un module de porte comprenant un rail (34) formant au moins une partie d'une des parties extrêmes latérales (4) de la face de support (2), s'étendant de façon continue avec le reste du module (1) et formant un décrochement (40) par rapport à la face de support (2) du module, ledit rail (34) s'étendant dans au moins deux plans différents du plan de la face de support (2), la face de support (2) présentant la forme d'un cadre entourant une ouverture centrale (6),
- injecter en une étape unique une matière unique dans un moule d'injection comprenant uniquement deux parties de moule
- démouler le module par écartement des deux parties de moule, le démoulage du rail se faisant par écartement des deux parties de moule sans l'utilisation d'un tiroir mobile supplémentaire.

## Patentansprüche

1. Türmodul (1) für ein Kraftfahrzeug, das aus einem einzigen Stück und aus einem einzigen gespritzten Kunststoffmaterial hergestellt ist, wobei das Modul eine im Wesentlichen ebene Trägerfläche (2) und mindestens eine Führungsschiene (34) eines Fensterhebersystems umfasst, wobei die Schiene (34) dazu dient, eine Trägervorrichtung (32) für das Fenster eines Kraftfahrzeugs zu führen und zu halten, **dadurch gekennzeichnet, dass** die Schiene (34) mindestens einen Abschnitt eines der seitlichen äußeren Teile der Trägerfläche (2) bildet und sich in kontinuierlicher Weise mit dem Rest des Moduls (1) erstreckt und einen Absatz (40) in Bezug auf die Trägerfläche (2) bildet, wobei die Schiene (34) sich in mindestens zwei unterschiedlichen Ebenen der Ebene der Trägerfläche (2) erstreckt, wobei das Türmodul eine Versteifungsrippe (29) umfasst, die sich quer beidseitig der Trägerfläche (2) erstreckt, **dadurch gekennzeichnet, dass** die Trägerfläche eine mittlere Öffnung umgebenden Rahmenform ausweist.

2. Türmodul nach Anspruch 1, **dadurch gekennzeichnet, dass** es zwei Führungsschienen (34) eines Fensterhebersystems umfasst, wobei jede Schiene (34) mindestens einen Abschnitt eines seitlichen äußeren Teils (4) der Trägerfläche (2) bildet, wobei die Schienen (34) sich in kontinuierlicher Weise mit dem Rest des Moduls (1) erstrecken und jeweils einen Absatz (40) in Bezug auf die Trägerfläche (2) bilden, wobei die Schienen (34) sich jede in mindestens zwei unterschiedlichen Ebenen der Ebene der Trägerfläche (2) erstrecken.

3. Türmodul nach Anspruch 1 oder 2, **dadurch gekennzeichnet, dass** die Schiene (34) einen ersten Schenkel (42), der sich im Wesentlichen in einer zur Trägerfläche (2) liegenden Querebene erstreckt, und einen zweiten Schenkel (44) umfasst, der sich im Wesentlichen in einer Längsebene von dem ersten Schenkel (42) erstreckt.

4. Türmodul nach einem beliebigen der Ansprüche 1 bis 3, **dadurch gekennzeichnet, dass** es mindestens einen Lautsprecherträger (16) umfasst, der von einer Öffnung (22) in der Trägerfläche (2) gebildet wird.

5. Türmodul nach einem beliebigen der Ansprüche 1 bis 4, **dadurch gekennzeichnet, dass** es mindestens eine Stütze zur Aufnahme (18) eines Türinnengriffs umfasst.

6. Türmodul nach einem beliebigen der Ansprüche 1 bis 5, **dadurch gekennzeichnet, dass** es mindestens ein Trägermittel (36) für Betätigungsmittel des Fensterhebersystems umfasst.

7. Türmodul nach einem beliebigen der Ansprüche 1 bis 6, **dadurch gekennzeichnet, dass** es mindestens ein Mittel (24) zur Aufnahme von Funktionskabeln des Kraftfahrzeugs umfasst.

8. Türmodul nach einem beliebigen der Ansprüche 1 bis 7, **dadurch gekennzeichnet, dass** es Versteifungsmittel (26) des Moduls umfasst, wobei die Mittel durch eine Mehrzahl von Stegen (27, 28, 29) gebildet wird, die sich in Bezug auf die Trägerfläche (2) vorspringend erstrecken.

9. Türmodul nach einem beliebigen der Ansprüche 1 bis 8, **dadurch gekennzeichnet, dass** mindestens das seitliche äußere Teil (4), das die Führungsschiene (34) aufweist, eine Querversteifungsrippe (29) umfasst, die sich über mindestens einen Abschnitt des äußeren Teils (4) und vorzugsweise über die gesamte Länge der Führungsschiene erstreckt.

10. Türmodul nach Anspruch 1, wobei Rippen in Sägezahn zwischen transversal vorspringend lateral Ränder (4) und transversal vorspringend Ränder (30), die sich über die Peripherie der mittleren Öffnung erstrecken, erstrecken.

11. Türmodul nach einem beliebigen der Ansprüche 1 bis 9, **dadurch gekennzeichnet, dass** das einzige eingespritzte Material ein Kunststoff auf der Basis von Propylen, verstärkt durch Glasfasern, ist.

12. Kraftfahrzeugtür (8), die eine Öffnung (10) zur Aufnahme eines Türmoduls (1) umfasst, wobei ein Türmodul (1) nach einem beliebigen der Ansprüche 1 bis 10 in der Aufnahmeöffnung (10) befestigt ist, ein Fensterhebersystem an dem Türmodul zusammengestellt ist, wobei das System mindestens eine Trägervorrichtung (32) eines Fensters umfasst, das in gleitender Weise auf der Schiene (34) des Türmoduls (1) montiert ist.

13. Kraftfahrzeugtür nach Anspruch 12, wobei die Trägervorrichtung (32) zu der Schiene (34) umgeben geformt ist und eine transversal Sprung aufweisende Öffnung (46) aufweist, wobei der Schiene die Beibehaltung der Trägervorrichtung (32) im transversal und longitudinal Richtungen sicherstellt.

14. Kraftfahrzeugtür nach Anspruch 12 oder 13, wobei die Tür ein Blatt aus wasserbeständig material ausweist, wobei das Blatt die Abdischtungsarbeiten zwischen dem Türmodul and der Tür sicherstellt.

15. Verfahren zur Herstellung eines Türmoduls (1) nach einem beliebigen der Ansprüche 1 bis 11, die folgenden Schritte umfassend:
- Konzipieren eines Türmoduls, umfassend eine Schiene (34), die mindestens einen Abschnitt eines der seitlichen äußeren Teile (4) der Trägerfläche (2) bildet, sich in kontinuierlicher Weise mit dem Rest des Moduls (1) erstreckt und einen Absatz (40) in Bezug auf die Trägerfläche (2) des Moduls bildet, wobei die Schiene (34) sich mindestens in zwei unterschiedlichen Ebenen zu der Ebene der Trägerfläche (2) erstreckt, wobei die Trägerfläche eine mittlere Öffnung umgebenden Rahmenform ausweist,
- Einspritzen eines einzigen Materials in ein Spritzformwerkzeug in einem einzigen Schritt, das nur zwei Formteile umfasst,
- Entformen des Moduls durch Entfernen der zwei Formenteile, wobei das Entformen der Schiene durch Entfernen der zwei Formenteile ohne die Verwendung eines zusätzlichen beweglichen Schiebers vorgenommen wird.

## Claims

1. A door module (1) for a motor vehicle, formed by a single part and from a single injected material, said module comprising a substantially flat supporting face (2) and at least one guide rail (34) of a window regulator system, such a rail (34) being designed to guide and maintain a motor vehicle window supporting device (32 said rail (34) forming at least one part of one of the lateral end parts (4) of the supporting face (2), said rail (34) extending continuously with the rest of the module (1) and forming a projection (40) in relation to the supporting face (2), said rail (34) extending in at least two planes different from the plane of the supporting face (2), **characterized in that** the supporting face has a shape of a frame surrounding a central opening (6).

2. The door module according to claim 1, **characterized in that** it comprises two guide rails (34) of a window regulator system, each rail (34) forming at least one part of a lateral end part (4) of the supporting face (2), said rails (34) extending continuously with the rest of the module (1) and each forming a projection (40) relative to the supporting face (2), such rails (34) each extending in at least two planes different from the plane of the supporting face (2).

3. The door module according to claim 1 or 2, **characterized in that** the rail (34) comprises a first branch (42) extending substantially in a transverse plane from the supporting face (2) and a second branch (44) extending substantially in a longitudinal plane from the first branch (42).

4. The door module according to any one of claims 1 to 3, **characterized in that** it comprises at least one speaker support (16) formed by an opening (22) in the supporting face (2).

5. The door module according to any one of claims 1 to 4, **characterized in that** it comprises at least one support (18) receiving an inside door handle.

6. The door module according to any one of claims 1 to 5, **characterized in that** it comprises at least one means (36) for supporting actuating means of the window regulator system.

7. The door module according to any one of claims 1 to 6, **characterized in that** it comprises at least one means (24) for receiving functional cables of the motor vehicle.

8. The door module according to any one of claims 1 to 7, **characterized in that** it comprises means (26) for reinforcing the module, said means being formed by a plurality of ribs (27, 28, 29) protruding from the supporting face (2).

9. The door module according to any one of claims 1 to 8, **characterized in that** at least the lateral end part (4) having the guide rail (34) comprises a transverse reinforcing rib (29) extending over at least part of said end part (4), and preferably over the entire length of said guide rail.

10. The door module according claim 9, wherein ribs (28) extend in a saw tooth pattern between the lateral edges (4) protruding transversaly and edges protruding transversaly, extending over the periphery of the central opening of the supporting face (2).

11. The door module according to any one of claims 1 to 10, **characterized in that** the single injected material is a polypropylene-based plastic reinforced with glass fibers.

12. A motor vehicle door, said door (8) comprising an opening (10) for receiving a door module (1), a door module (1) according to any one of claims 1 to 11 being fixed in said receiving opening (10), a window regulator system being assembled on said door module (1), said system comprising at least one device (32) for supporting a window slidably mounted on the rail (34) of the door module (1).

13. A motor vehicle door according to claim 12, wherein the supporting device (32) is shaped to surround the rail (34) and comprises an opening (46) having slot (48) extending transversaly, the rail (34) ensuring the maintaining according to the longitudinal and transversal directions of the window supporting device (32).

14. A motor vehicle door according to claim 12, further comprising a sheet of impermeable material ensuring the sealing between the door module (1) and the door (8).

15. A method for producing a door module (1) according to any one of claims 1 to 11, comprising the following steps:
- designing a door module comprising a rail (34) forming at least a part of one of the lateral end parts (4) of the supporting face (2), extending continuously with the rest of the module (1) and forming a projection (40) in relation to the supporting face (2), said rail (34) extending in at least two planes different from the plane of the supporting face (2), the supporting face having the shape of a frame surrounding a central opening (6),
- injecting in a single step a single material into an injection mold comprising only two mold parts
- demoulding the module by separating the two parts of the mold without using an additional movable drawer.
